# EUROPEAN PATENT SPECIFICATION

(11) **EP 2 287 256 B1**
(45) Date of publication and mention of the grant of the patent: **13.06.2012**
(21) Application number: 10170074.8
(22) Date of filing: 20.07.2010
(51) Int. Cl.: C08L 95/00

(54) **Process for the preparation of a mixture of bitumen having a high processabillity**
Verfahren zur Herstellung einer Bitumenmischung mit guter Verarbeitbarkeit
Procédé de préparation d'un mélange bitumineux avec un usinage amélioré.

(30) Priority: 23.07.2009 IT MI20091310
(43) Date of publication of application: 23.02.2011
(73) Proprietor: ENI S.p.A., 00144 Rome (IT)
(72) Inventor: Italia, Paolo, 20144, MILANO (IT); D'Elia, Luigi, 26025, PANDINO (CR) (IT)
(74) Representative: Bottero, Carlo

(56) References cited:
- EP-A1- 1 866 378
- WO-A1-02/16499
- WO-A1-2009/013328
- JP-A- 2003 055 559
- US-B1- 6 884 831

## Description

The present invention relates to a process for the preparation of a mixture of bitumen having a high processability.

More specifically, the present invention relates to a process for the preparation of a mixture of bitumen which comprises mixing at least one product in granular form including at least one elastomeric polymer and at least one paraffinic wax from the Fischer-Tropsch process with at least one bitumen.

Said mixture of bitumen can be advantageously used, for example, for the preparation of closed, open or recycled bituminous conglomerates, or for the preparation of bituminous emulsions.

It is known that for improving the quality of bitumens, particularly from the point of view of cold flexibility, hot consistency, and adhesion, different types of polymers are generally used, in particular copolymers of the elastomeric type.

Styrene-conjugated diene block copolymers, particularly styrene-butadiene copolymers or styreneisoprene copolymers, are generally considered to be the most effective for the above purpose. The use of these copolymers, however, can create problems of processability of the mixtures of bitumen thus obtained, in particular, it can cause an increase in the viscosity and a consequent increase in the processing temperatures of the same. The use of these copolymers can therefore cause both an increase in the preparation temperatures of bituminous conglomerates, and also an increase in the application temperatures (laying and compacting) of said bituminous conglomerates, with a consequent higher energy consumption and a higher amount of emissions of polluting substances into the atmosphere. Said copolymers, moreover, generally have the disadvantage of having a poor compatibility with the bitumen itself. During storage at high temperatures, under static conditions, said poor compatibility can, for example, cause a separation of the two components with the consequent formation of an upper layer rich in polymer and a lower layer rich in bitumen.

Numerous processes have been proposed to overcome these drawbacks.

European patent EP 496,457, for example, describes a process for the preparation of mixtures of bitumen stable during storage and having improved properties, which comprises reacting a bitumen-polymer mixture with an unsaturated aliphatic dicarboxylic acid or with the relative anhydride.

European patent 640,665 describes a process for the preparation of mixtures of bitumen stable during storage, which comprises reacting a bitumen-polymer mixture with an unsaturated organic compound selected from those having a double -C=C- bond and a molecular weight ranging from 70 to 1,000, the unsaturated aromatic compounds being excluded, said unsaturated organic compound preferably being selected from 1-alkenes, esters of acrylic or methacrylic acid, oleic acid, dicyclopentadiene.

American patent US 7,439,286 describes a process for the preparation of a modified bitumen composition which comprises putting a bitumen in contact with at least one plastomer selected from oxidized polyolefins or polyolefins grafted with acrylic acid and with at least one elastomer. A process is also described, comprising: (1) putting at least one plastomer, selected from homopolymers or copolymers having at least one polar functional group such as, for example, oxidized polyolefins (for example, Epolene^{®} E-20), or polyolefins grafted with acrylic acid, in contact, in an extruder, with at least one elastomer preferably selected from block copolymers of at least one conjugated diene and at least one monoalkenyl aromatic hydrocarbon, such as, for example, styrene-butadiene-styrene copolymers, so as to obtain a pellet; (2) adding said pellet to the bitumen, in a mixer, so as to obtain a modified bitumen composition. The modified bitumen thus obtained is said to have at least one of the following characteristics: a wider "Performance Grade Rating" ("PG rating"), a reduction in the production of gases and powders which can be formed during the addition of the plastomer and elastomer and stability during storage.

The processes described above, however, can have some critical aspects. The use of plastomers containing at least one polar functional group, for example, can cause modifications of the elastomer during extrusion with possible negative consequences on the characteristics of the modified bitumen subsequently obtained. Furthermore, the use of plastomers having a low molecular weight (for example Epolene^{®} E-20), could cause the so-called "slow setting" phenomenon in the bituminous conglomerate. In addition, the bitumen mixtures obtained with the above processes can require higher processing temperatures with respect to those generally used in the processing of traditional non-modified bitumens, with consequent possible limitations in the subsequent uses, for example, in the case of applications far from the production plants of the bituminous conglomerates, or in the case of use under adverse environmental conditions.

The Applicant has now found that the preparation of a mixture of bitumen having a high processability can be advantageously carried out by mixing at least one product in granular form including at least one elastomeric polymer and at least one paraffinic wax from the Fischer-Tropsch process with a bitumen. Said process allows to obtain a mixture of bitumen having a low viscosity and, consequently, a low processing temperature. The use of the mixture of bitumen obtained by means of said process allows to lower the preparation temperatures of the bituminous conglomerates (by about 20°C-30°C), as well as to lower the application temperatures (laying and compacting) of said bituminous conglomerates (by about 20°C-30°C), with a consequent lower energy consumption and lower environmental impact. Said process also allows to obtain a mixture of bitumen which, thanks to the low viscosity, enables the re-use of materials recovered from exhausted paving such as milled products, with a consequent reduction in the request for virgin quarry materials and consequently a further reduction in the environmental impact. Furthermore, said process allows to obtain mixtures of bitumen which are stable during storage. Said process also facilitates the dispersion of the elastomer in the bitumen.

An object of the present invention therefore relates to a process for the preparation of a mixture of bitumen comprising mixing at least one product in granular form including at least one elastomeric polymer and at least one paraffinic wax from the Fischer-Tropsch process with at least one bitumen.

According to a preferred embodiment of the present invention, said process can be carried out at a temperature lower than or equal to 200°C, preferably ranging from 160°C to 190°C.

According to a preferred embodiment of the present invention, said process can be carried out for a time ranging from 3.5 hours to 10 hours, preferably from 4 hours to 8 hours.

For the purposes of the present description and of the following claims, the definitions of the numerical ranges always comprise the extremes unless otherwise specified.

According to a preferred embodiment of the present invention, said product in granular form can have an average diameter ranging from 0.5 mm to 10 mm, preferably from 1 mm to 5 mm.

Said product in granular form can be obtained by mixing the two components, i.e. at least one elastomeric polymer and at least one paraffinic wax from the Fischer-Tropsch process, followed by granulation, which can be carried out through various processes. Said mixing can be carried out, for example, using an open mill or an internal mixer of the type with tangential rotors (Banbury) or with interlocking rotors (Intermix), or in continuous mixers such as, for example, a "Ko-Kneader mixer" (Buss), or by extrusion using co-rotating or counter-rotating twin-screw extruders, or single-screw extruders. Said granulation can be carried out, for example, by grinding the mixture obtained or, in the case of extrusion, by cutting the extruded material in the form of "spaghetti" (for example, using a chopper). Said product in granular form is preferably obtained by extrusion and subsequent cutting of the "spaghetti" obtained from said extrusion.

According to a preferred embodiment of the present invention, said elastomeric polymer can be selected from block copolymers of at least one conjugated diene with at least one vinyl aromatic compound. Said conjugated diene is preferably selected, for example, from: butadiene, isoprene, chloroprene, butadiene carboxylate, isoprene carboxylate, or mixtures thereof. Even more preferably, said conjugated diene can be selected from butadiene, or isoprene. Said vinyl aromatic compound can preferably be selected from: styrene, α-methylstyrene, ortho- meta- or para-methylstyrene, para-t-butylstyrene, ortho- meta- or para-ethylstyrene, or mixtures thereof. Even more preferably, said vinyl aromatic compound is styrene.

Said block copolymers can be represented by general formula (I) or by general formula (II):

A-B-A (I)

or

(A-B)ₙX (II)

wherein each block A represents a polymeric block obtained from vinyl aromatic monomers; each block B represents a polymeric block obtained from monomers of conjugated dienes; X represents a radical deriving from a coupling agent; n is an integer ranging from 2 to 30, preferably from 3 to 10.

Said block copolymers can be of the radial, linear or star type, as well as mixed block copolymers or tapered copolymers. Said copolymers can also be used in oil-extended form.

According to a further preferred embodiment of the present invention, said elastomeric polymer can be selected from block copolymers of the radial type containing polystyrene and polybutadiene blocks, i.e. styrene-butadiene-styrene (SBS) blocks copolymers. Said styrene-butadiene-styrene blocks copolymers preferably have a styrene/butadiene ratio ranging from 20/80 to 40/60, more preferably from 25/75 to 35/65, and an average molecular weight ranging from 50,000 to 1,000,000, more preferably from 100,000 to 500,000.

Said average molecular weight can be determined according to conventional techniques such as, for example, gel permeation chromatography or GPC.

Specific examples of block copolymers which can be used according to the present invention and are commercially available are products known with the name Europrene^{®} SOL T 161B of Polimeri Europa, Kraton^{®} D1186 of Kraton Polymer, Pavprene^{®} 511K della So.F.teR..

According to a preferred embodiment of the present invention, said paraffinic wax from the Fischer Tropsch process can be selected from paraffinic waxes having a number of carbon atoms higher than or equal to 35, preferably ranging from 40 to 120. Said paraffinic waxes from the Fischer Tropsch process preferably comprise n-paraffins and iso-paraffins, more preferably they comprise more than 98% by weight of n-paraffins and iso-paraffins and only a small amount of cycloparaffins and/or olefins.

According to a further preferred embodiment of the present invention, said paraffinic wax from the Fischer Tropsch process can have a melting point higher than or equal to 70°C, preferably ranging from 80°C to 120°C.

A specific example of a paraffinic wax from the Fischer Tropsch process which can be used according to the present invention and is commercially available is the product known as Sasobit^{®} of Sasol.

According to a preferred embodiment of the present invention, said product in granular form can include said elastomeric polymer in an amount ranging from 30% by weight to 90% by weight, preferably ranging from 40% by weight to 80% by weight, with respect to the total weight of said product in granular form.

According to a preferred embodiment of the present invention, said product in granular form can include said paraffin wax from the Fischer Tropsch process in an amount ranging from 10% by weight to 90% by weight, preferably ranging from 20% by weight to 60% by weight, with respect to the total weight of said product in granular form.

According to a preferred embodiment of the present invention, said elastomeric polymer can be present in said mixture of bitumen in an amount ranging from 1% by weight to 10% by weight, preferably ranging from 2% by weight to 6% by weight, with respect to the total weight of said mixture of bitumen.

According to a preferred embodiment of the present invention, said paraffinic wax from the Fischer Tropsch process can be present in said mixture of bitumen in an amount ranging from 0.5% by weight to 8% by weight, preferably ranging from 1% by weight to 5% by weight, with respect to the total weight of said mixture of bitumen.

According to a preferred embodiment of the present invention, said bitumen can be selected from bitumens deriving from oil refining by means of various processes such as: vacuum distillation, deasphaltation with solvents in lubricant cycle refineries; thermal treatment of residues deriving from said processes; treatment of residues deriving from said processes in the presence of air streams for the formation of oxidized bitumens, or in the presence of water vapour for the formation of semi-solid bitumens; or mixtures thereof.

According to a preferred embodiment of the present invention, said bitumen can be selected from bitumens deriving from vacuum distillation; or from deasphaltation with solvents in lubricant cycle refineries; or mixtures thereof.

The mixing of the product in granular form and bitumen can be carried out in mixers known in the art such as, for example, mixers with high shear mixing, or mixers with low shear mixing. The product in granular form and bitumen are preferably mixed in a mixer with high shear mixing and subsequently mixed in a mixer with low shear mixing.

Some illustrative and non-limiting examples are provided for a better understanding of the present invention and for its embodiment.

### EXAMPLE 1

### Preparation of the mixture of bitumen

300 g of a mixture of bitumen containing:
- 6.4% by weight with respect to the total weight of said mixture of bitumen of a product in granular form including 71% by weight with respect to the total weight of said product in granular form of a styrene-butadiene-styrene block copolymer (Pavprene^{®} 511 K of So.F.teR.) and 29% by weight with respect to the total weight of said product in granular form of a paraffinic wax from the Fischer Tropsch process (Sasobit^{®} of Sasol); and
- 93.6% by weight with respect to the total weight of said mixture of bitumen of a bitumen deriving from deasphaltation with solvents in a lubricant cycle refinery having the characteristics shown in Table 1;
were prepared in the following way.

The product in granular form and bitumen were mixed in a mixer with high shear mixing, at 185°C, for 30 minutes. The mixture thus obtained was then transferred to a mixer with low shear mixing and further mixed, at 185°C, for 7 hours.

The resulting mixture of bitumen had the characteristics indicated in Table 2.

**Table 1**

| CHARACTERISTICS | VALUES | MEASUREMENT METHODS |
|---|---|---|
| Penetration at 25°C (dmm) | 72 | EN 1426 |
| Ring & Ball (°C) | 45 | EN 1427 |
| Viscosity at 60°C (poise) | 1360 | EN 12596 |
| Viscosity at 160°C (poise) | 1.0 | EN 12596 |

**TABLE 2**

| CHARACTERISTICS | VALUES | MEASUREMENT METHODS |
|---|---|---|
| Penetration at 25°C (dmm) | 40 | EN 1426 |
| Ring & Ball (°C) | 99 | EN 1427 |
| Viscosity at 160°C (poise) | 4.5 | EN 13702-1 |
| Viscosity at 180°C (poise) | 3.2 | EN 13702-1 |
| Δ Ring & Ball* (°C) | 3.5 | EN 13399 |

| | | |
|---|---|---|
| *: difference in the Ring & Ball values between the top and bottom after three days of storage at 180°C. | | |

The viscosity values indicated in Table 2 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 2, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

### EXAMPLE 2

### Preparation of the mixture of bitumen

300 g of a mixture of bitumen containing:
- 5.4% by weight with respect to the total weight of said mixture of bitumen of a product in granular form including 50% by weight with respect to the total weight of said product in granular form of a styrene-butadiene-styrene block copolymer (Pavprene^{®} 511 K of So.F.teR.) and 50% by weight with respect to the total weight of said product in granular form of a paraffinic wax from the Fischer Tropsch process (Sasobit^{®} of Sasol); and
- 94.6% by weight with respect to the total weight of said mixture of bitumen of a bitumen deriving from deasphaltation with solvents in a lubricant cycle refinery having the characteristics shown in Table 1;
were prepared in the following way.

The product in granular form and bitumen were mixed in a mixer with high shear mixing, at 185°C, for 30 minutes. The mixture thus obtained was then transferred to a mixer with low shear mixing and further mixed, at 185°C, for 7 hours.

The resulting mixture of bitumen had the characteristics indicated in Table 3.

**TABLE 3**

| CHARACTERISTICS | VALUES | MEASUREMENT METHODS |
|---|---|---|
| Penetration at 25°C (dmm) | 45 | EN 1426 |
| Ring & Ball (°C) | 85 | EN 1427 |
| Viscosity at 160°C (poise) | 3.8 | EN 13702-1 |
| Viscosity at 180°C (poise) | 1.8 | EN 13702-1 |
| Δ Ring & Ball* (°C) | 2.5 | EN 1427 |

| | | |
|---|---|---|
| *: difference in the Ring & Ball values between the top and bottom after three days of storage at 180°C. | | |

The viscosity values indicated in Table 3 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 3, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

### EXAMPLE 3

### Preparation of the mixture of bitumen

300 g of a mixture of bitumen containing:
- 6% by weight with respect to the total weight of said mixture of bitumen of a product in granular form including 50% by weight with respect to the total weight of said product in granular form of a styrene-butadiene-styrene block copolymer (Pavprene^{®} 511 K of So.F.teR.) and 50% by weight with respect to the total weight of said product in granular form of a paraffinic wax from the Fischer Tropsch process (Sasobit^{®} of Sasol); and
- 94% by weight with respect to the total weight of said mixture of bitumen of a bitumen deriving from vacuum distillation having the characteristics shown in Table 4;
were prepared in the following way.

The product in granular form and bitumen were mixed in a mixer with high shear mixing, at 185°C, for 30 minutes. The mixture thus obtained was then transferred to a mixer with low shear mixing and further mixed, at 185°C, for 7 hours.

The resulting mixture of bitumen had the characteristics indicated in Table 5.

**TABLE 4**

| CHARACTERISTICS | VALUES | MEASUREMENT METHODS |
|---|---|---|
| Penetration at 25°C (dmm) | 111 | EN 1426 |
| Ring & Ball (°C) | 45 | EN 1427 |
| Viscosity at 60°C (poise) | 780 | EN 12596 |
| Viscosity at 160°C (poise) | 0.6 | EN 12596 |

**TABLE 5**

| CHARACTERISTICS | VALUES | MEASUREMENT METHODS |
|---|---|---|
| Penetration at 25°C (dmm) | 44 | EN 1426 |
| Ring & Ball (°C) | 84 | EN 1427 |
| Viscosity at 160°C (poise) | 3.2 | EN 13702-1 |
| Viscosity at 180°C (poise) | 1.5 | EN 13702-1 |
| Δ Ring & Ball* (°C) | 1 | EN 13399 |

| | | |
|---|---|---|
| *: difference in the Ring & Ball values between the top and bottom after three days of storage at 180°C. | | |

The viscosity values indicated in Table 5 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 5, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

### EXAMPLE 4

### Preparation of the mixture of bitumen

300 g of a mixture of bitumen containing:
- 6% by weight with respect to the total weight of said mixture of bitumen of a product in granular form including 50% by weight with respect to the total weight of said product in granular form of a styrene-butadiene-styrene block copolymer (Pavprene^{®} 511 K of So.F.teR.) and 50% by weight with respect to the total weight of said product in granular form of a paraffinic wax from the Fischer Tropsch process (Sasobit^{®} of Sasol); and
- 94% by weight with respect to the total weight of said mixture of bitumen of a bitumen deriving from vacuum distillation having the characteristics shown in Table 6;
were prepared in the following way.

The product in granular form and bitumen were mixed in a mixer with high shear mixing, at 185°C, for 30 minutes. The mixture thus obtained was then transferred to a mixer with low shear mixing and further mixed, at 185°C, for 7 hours.

The resulting mixture of bitumen had the characteristics indicated in Table 7.

**TABLE 6**

| CHARACTERISTICS | VALUES | MEASUREMENT METHODS |
|---|---|---|
| Penetration at 25°C (dmm) | 85 | EN 1426 |
| Ring & Ball (°C) | 45 | EN 1427 |
| Viscosity at 60°C (poise) | 760 | EN 12596 |
| Viscosity at 160°C (poise) | 0.9 | EN 12596 |

**TABLE 7**

| CHARACTERISTICS | VALUES | MEASUREMENT METHODS |
|---|---|---|
| Penetration at 25°C (dmm) | 35 | EN 1426 |
| Ring & Ball (°C) | 99 | EN 1427 |
| Viscosity at 160°C (poise) | 3.5 | EN 13702-1 |
| Viscosity at 180°C (poise) | 1.5 | EN 13702-1 |
| Δ Ring & Ball* (°C) | 2 | EN 13399 |

| | | |
|---|---|---|
| *: difference in the Ring & Ball values between the top and bottom after three days of storage at 180°C. | | |

The viscosity values indicated in Table 7 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 7, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

### EXAMPLE 5

### Preparation of the mixture of bitumen

300 g of a mixture of bitumen containing:
- 6% by weight with respect to the total weight of said mixture of bitumen of a product in granular form including 50% by weight with respect to the total weight of said product in granular form of a styrene-butadiene-styrene block copolymer (Pavprene^{®} 511 K of So.F.teR.) and 50% by weight with respect to the total weight of said product in granular form of a paraffinic wax from the Fischer Tropsch process (Sasobit^{®} of Sasol); and
- 94% by weight with respect to the total weight of said mixture of bitumen of a bitumen deriving from vacuum distillation having the characteristics shown in Table 8;
were prepared in the following way.

The product in granular form and bitumen were mixed in a mixer with high shear mixing, at 175°C, for 30 minutes. The mixture thus obtained was then transferred to a mixer with low shear mixing and further mixed, at 175°C, for 7.5 hours.

The resulting mixture of bitumen had the characteristics indicated in Table 9.

**TABLE 8**

| CHARACTERISTICS | VALUES | MEASUREMENT METHODS |
|---|---|---|
| Penetration at 25°C (dmm) | 63 | EN 1426 |
| Ring & Ball (°C) | 47.8 | EN 1427 |
| Viscosity at 60°C (poise) | 1240 | EN 12596 |
| Viscosity at 160°C (poise) | 0.8 | EN 12596 |

**TABLE 9**

| CHARACTERISTICS | VALUES | MEASUREMENT METHODS |
|---|---|---|
| Penetration at 25°C (dmm) | 35 | EN 1426 |
| Ring & Ball (°C) | 98.5 | EN 1427 |
| Viscosity at 160°C (poise) | 4 | EN 13702-1 |
| Viscosity at 180°C (poise) | 2.3 | EN 13702-1 |
| Δ Ring & Ball* (°C) | 1.5 | EN 13399 |

| | | |
|---|---|---|
| *: difference in the Ring & Ball values between the top and bottom after three days of storage at 180°C. | | |

The viscosity values indicated in Table 9 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 9, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

### EXAMPLE 6

### Preparation of the mixture of bitumen

300 g of a mixture of bitumen containing:
- 6% by weight with respect to the total weight of said mixture of bitumen of a product in granular form including 50% by weight with respect to the total weight of said product in granular form of a styrene-butadiene-styrene block copolymer (Pavprene^{®} 511 K of So.F.teR.) and 50% by weight with respect to the total weight of said product in granular form of a paraffinic wax from the Fischer Tropsch process (Sasobit^{®} of Sasol); and
- 94% by weight with respect to the total weight of said mixture of bitumen of a bitumen deriving from vacuum distillation having the characteristics shown in Table 8;
were prepared in the following way.

The product in granular form and bitumen were mixed in a mixer with high shear mixing, at 185°C, for 30 minutes. The mixture thus obtained was then transferred to a mixer with low shear mixing and further mixed, at 185°C, for 4.5 hours.

The resulting mixture of bitumen had the characteristics indicated in Table 10.

**TABLE 10**

| CHARACTERISTICS | VALUES | MEASUREMENT METHODS |
|---|---|---|
| Penetration at 25°C (dmm) | 33 | EN 1426 |
| Ring & Ball (°C) | 98.5 | EN 1427 |
| Viscosity at 160°C (poise) | 4.1 | EN 13702-1 |
| Viscosity at 180°C (poise) | 2.2 | EN 13702-1 |
| Δ Ring & Ball* (°C) | 1 | EN 13399 |

| | | |
|---|---|---|
| *: difference in the Ring & Ball values between the top and bottom after three days of storage at 180°C. | | |

The viscosity values indicated in Table 10 show that the mixture of bitumen obtained according to the process of the present invention has a good processability: said mixture, in fact, has low viscosity values at high temperatures (i.e. 160°C and 180°C) with respect to the penetration characteristics at 25°C and Ring & Ball. Furthermore, from the values indicated in Table 10, it can be deduced that the mixture of bitumen obtained according to the process of the present invention is stable during storage: in fact, the Δ Ring & Ball values after three days of storage at 180°C, show that there is a minimum difference between the softening points determined on samples removed from the top and bottom of the container.

## Claims

1. A process for the preparation of a mixture of bitumen comprising mixing at least one product in granular form including at least one elastomeric polymer and at least one paraffinic wax from the Fischer-Tropsch process with at least one bitumen.

2. The process according to claim 1, wherein said process is carried out at a temperature lower than or equal to 200°C.

3. The process according to claim 2, wherein said process is carried out at a temperature ranging from 160°C to 190°C.

4. The process according to any of the previous claims, wherein said process is carried out for a time ranging from 3.5 hours to 10 hours.

5. The process according to claim 4, wherein said process is carried out for a time ranging from 4 hours to 8 hours.

6. The process according to any of the previous claims, wherein said product in granular form has an average diameter ranging from 0.5 mm to 10 mm.

7. The process according to claim 6, wherein said product in granular form has an average diameter ranging from 1 mm to 5 mm.

8. The process according to any of the previous claims, wherein said product in granular form is obtained by mixing the two components, i.e. at least one elastomeric polymer and at least one paraffinic wax from the Fischer-Tropsch process, followed by granulation, said mixing being carried out by extrusion and said granulation being carried out by cutting the "spaghetti" obtained from said extrusion.

9. The process according to any of the previous claims, wherein said elastomeric polymer is selected from block copolymers of at least one conjugated diene with at least one vinyl aromatic compound.

10. The process according to claim 9, wherein said block copolymers are represented by general formula (I) or by general formula (II):
A-B-A (I)
or
(A-B)ₙX (II)
wherein each block A represents a polymeric block obtained from vinyl aromatic monomers; each block B represents a polymeric block obtained from monomers of conjugated dienes; X represents a radical deriving from a coupling agent; n is an integer ranging from 2 to 30.

11. The process according to claim 9 or 10, wherein said elastomeric polymer is selected from block copolymers of the radial type containing blocks of polystyrene and polybutadiene, i.e. styrene-butadiene-styrene (SBS) block copolymers.

12. The process according to any of the previous claims, wherein said paraffinic wax from the Fischer-Tropsch process is selected from paraffinic waxes having a number of carbon atoms higher than or equal to 35.

13. The process according to claim 12, wherein said paraffinic wax from the Fischer-Tropsch process is selected from paraffinic waxes having a number of carbon atoms ranging from 40 to 120.

14. The process according to any of the previous claims, wherein said paraffinic wax from the Fischer-Tropsch process has a melting point higher than or equal to 70°C.

15. The process according to claim 14, wherein said paraffinic wax from the Fischer-Tropsch process has a melting point ranging from 80°C to 120°C.

16. The process according to any of the previous claims, wherein said product in granular form includes said elastomeric polymer in an amount ranging from 30% by weight to 90% by weight with respect to the total weight of said product in granular form.

17. The process according to claim 16, wherein said product in granular form includes said elastomeric polymer in an amount ranging from 40% by weight to 80% by weight with respect to the total weight of said product in granular form.

18. The process according to any of the previous claims, wherein said product in granular form includes said paraffinic wax from the Fischer-Tropsch process in an amount ranging from 10% by weight to 90% by weight with respect to the total weight of said product in granular form.

19. The process according to claim 18, wherein said product in granular form includes said paraffinic wax from the Fischer-Tropsch process in an amount ranging from 20% by weight to 60% by weight, with respect to the total weight of said product in granular form.

20. The process according to any of the previous claims, wherein said elastomeric polymer is present in said mixture of bitumen in an amount ranging from 1% by weight to 10% by weight, with respect to the total weight of said mixture of bitumen.

21. The process according to claim 20, wherein said elastomeric polymer is present in said mixture of bitumen in an amount ranging from 2% by weight to 6% by weight, with respect to the total weight of said mixture of bitumen.

22. The process according to any of the previous claims, wherein said paraffinic wax from the Fischer-Tropsch process is present in said mixture of bitumen in an amount ranging from 0.5% by weight to 8% by weight with respect to the total weight of said mixture of bitumen.

23. The process according to claim 22, wherein said paraffinic wax from the Fischer-Tropsch process is present in said mixture of bitumen in an amount ranging from 1% by weight to 5% by weight with respect to the total weight of said mixture of bitumen.

24. The process according to any of the previous claims, wherein said bitumen is selected from bitumens deriving from oil refining by means of vacuum distillation, deasphaltation with solvents in lubricant cycle refineries; thermal treatment of residues deriving from said processes; treatment of residues deriving from said processes in the presence of air streams for the formation of oxidized bitumens, or in the presence of water vapour for the formation of semi-solid bitumens; or mixtures thereof.

25. The process according to claim 24, wherein said bitumen is selected from bitumens deriving from vacuum distillation; or from deasphaltation with solvents in lubricant cycle refineries; or mixtures thereof.

## Patentansprüche

1. Verfahren zur Herstellung einer Bitumenmischung umfassend Mischen mindestens eines Produkts in granulärer Form einschließlich mindestens einem elastomeren Polymer und mindestens einem Paraffinwachs aus dem Fischer-Tropsch Verfahren mit mindestens einem Bitumen.

2. Verfahren nach Anspruch 1, wobei das Verfahren bei einer Temperatur niedriger oder gleich 200°C durchgeführt wird.

3. Verfahren nach Anspruch 2, wobei das Verfahren bei einer Temperatur im Bereich von 160°C bis 190°C durchgeführt wird.

4. Verfahren nach einem beliebigen der vorhergehenden Ansprüche, wobei das Verfahren für eine Zeit im Bereich von 3,5 Stunden bis 10 Stunden durchgeführt wird.

5. Verfahren nach Anspruch 4, wobei das Verfahren für eine Zeit im Bereich von 4 Stunden bis 8 Stunden durchgeführt wird.

6. Verfahren nach einem beliebigen der vorhergehenden Ansprüche, wobei das Produkt in granulärer Form einen mittleren Durchmesser im Bereich von 0,5 mm bis 10 mm aufweist.

7. Verfahren nach Anspruch 6, wobei das Produkt in granulärer Form einen mittleren Durchmesser im Bereich von 1 mm bis 5 mm aufweist.

8. Verfahren nach einem beliebigen der vorhergehenden Ansprüche, wobei das Produkt in granulärer Form durch Mischen der zwei Komponenten erhalten wird, d.h. mindestens einem elastomeren Polymer und mindestens einem Paraffinwachs aus dem Fischer-Tropsch Verfahren, gefolgt von Granulation, wobei das Mischen durch Extrusion durchgeführt wird und die Granulation durch Schneiden der aus der Extrusion erhaltenen "Spaghetti" durchgeführt wird.

9. Verfahren nach einem beliebigen der vorhergehenden Ansprüche, wobei das elastomere Polymer ausgewählt ist aus Blockcopolymeren von mindestens einem konjugierten Dien mit mindestens einer vinylaromatischen Verbindung.

10. Verfahren nach Anspruch 9, wobei die Block-Copolymere durch die allgemeine Formel (I) oder die allgemeine Formel (II) dargestellt sind:
A-B-A (I)
oder
(A-B)ₙX (II)
wobei jeder Block A einen aus vinylaromatischen Monomeren erhaltenen polymeren Block darstellt; jeder Block B einen aus Monomeren von konjugierten Dienen erhaltenen polymeren Block darstellt; X einen aus einem Kopplungsmittel stammenden Rest darstellt; n eine ganze Zahl aus dem Bereich von 2 bis 30 ist.

11. Verfahren nach Anspruch 9 oder 10, wobei das elastomere Polymer ausgewählt ist aus Block-Copolymeren des Radialtyps, das Blöcke von Polystyrol und Polybutadien enthält, d.h. Styrolbutadien-Styrol (SBS) Block-Copolymeren.

12. Verfahren nach einem beliebigen der vorhergehenden Ansprüche, wobei das Paraffinwachs aus dem Fischer-Tropsch Verfahren ausgewählt ist aus Paraffinwachsen mit einer Anzahl von Kohlenstoffatomen höher oder gleich 35.

13. Verfahren nach Anspruch 12, wobei das Paraffinwachs aus dem Fischer-Tropsch Verfahren ausgewählt ist aus Paraffinwachsen mit einer Anzahl von Kohlenstoffatomen im Bereich von 40 bis 120.

14. Verfahren nach einem beliebigen der vorhergehenden Ansprüche, wobei das Paraffinwachs aus dem Fischer-Tropsch Verfahren einen Schmelzpunkt von höher oder gleich 70°C aufweist.

15. Verfahren nach Anspruch 14, wobei das Paraffinwachs aus dem Fischer-Tropsch Verfahren einen Schmelzpunkt im Bereich von 80°C bis 120°C aufweist.

16. Verfahren nach einem beliebigen der vorhergehenden Ansprüche, wobei das Produkt in granulärer Form das elastomere Polymer in einer Menge im Bereich von 30 Gew.-% bis 90 Gew.-% in Bezug auf das Gesamtgewicht des Produkts in granulärer Form einschließt.

17. Verfahren nach Anspruch 16, wobei das Produkt in granulärer Form das elastomere Polymer in einer Menge im Bereich von 40 Gew.-% bis 80 Gew.-% in Bezug auf das Gesamtgewicht des Produkts in granulärer Form einschließt.

18. Verfahren nach einem beliebigen der vorhergehenden Ansprüche, wobei das Produkt in granulärer Form das Paraffinwachs aus dem Fischer-Tropsch Verfahren in einer Menge im Bereich von 10 Gew.-% bis 90Gew.-% in Bezug auf das Gesamtgewicht des Produkts in granulärer Form einschließt.

19. Verfahren nach Anspruch 18, wobei das Produkt in granulärer Form das Paraffinwachs aus dem Fischer-Tropsch Verfahren in einer Menge im Bereich von 20 Gew.-% bis 60 Gew.-% in Bezug auf das Gesamtgewicht des Produkts in granulärer Form einschließt.

20. Verfahren nach einem beliebigen der vorhergehenden Ansprüche, wobei das elastomere Polymer in der Bitumenmischung in einer Menge im Bereich von 1 Gew.- % bis 10 Gew-% in Bezug auf das Gesamtgewicht der Bitumenmischung vorliegt.

21. Verfahren nach Anspruch 20, wobei das elastomere Polymer in der Bitumenmischung in einer Menge im Bereich von 2 Gew.-% bis 6 Gew.-% in Bezug auf das Gesamtgewicht der Bitumenmischung vorliegt.

22. Verfahren nach einem beliebigen der vorhergehenden Ansprüche, wobei das Paraffinwachs aus dem Fischer-Tropsch Verfahren in der Bitumenmischung in einer Menge im Bereich von 0,5 Gew.-% bis 8 Gew.-% in Bezug auf das Gesamtgewicht der Bitumenmischung vorliegt.

23. Verfahren nach Anspruch 22, wobei das Paraffinwachs aus dem Fischer-Tropsch Verfahren in der Bitumenmischung in einer Menge im Bereich von 1 Gew.-% bis 5 Gew.-% in Bezug auf das Gesamtgewicht der Bitumenmischung vorliegt.

24. Verfahren nach einem beliebigen der vorhergehenden Ansprüche, wobei das Bitumen ausgewählt ist aus Bitumenen, die aus der Ölraffination durch Vakuumdestillation stammen, Entasphaltierung mit Lösungsmitteln in Raffinerien mit Schmiermittelkreislauf; Wärmebehandlung von aus den Verfahren stammenden Resten; Behandlung von aus den Verfahren stammenden Resten in Gegenwart von Luftströmen zur Bildung von oxidierten Bitumenen, oder in der Gegenwart von Wasserdampf zur Bildung von halbfesten Bitumenen; oder Mischungen davon.

25. Verfahren nach Anspruch 24, wobei das Bitumen ausgewählt ist aus Bitumenen, die aus Vakuumdestillation stammen; oder aus Entasphaltierung mit Lösungsmitteln in Raffinerien mit Schmiermittelkreislauf; oder Mischungen davon.

## Revendications

1. Procédé de préparation d'un mélange bitumineux consistant à mélanger au moins un produit sous forme granulaire comprenant au moins un polymère élastomère et au moins une cire paraffinique issue du procédé Fischer-Tropsch avec au moins un bitume.

2. Procédé selon la revendication 1, ledit procédé étant réalisé à une température inférieure ou égale à 200°C.

3. Procédé selon la revendication 2, ledit procédé étant réalisé à une température allant de 160°C à 190°C.

4. Procédé selon l'une quelconque des revendications précédentes, ledit procédé étant réalisé pendant une durée allant de 3,5 heures à 10 heures.

5. Procédé selon la revendication 4, ledit procédé étant réalisé pendant une durée allant de 4 heures à 8 heures.

6. Procédé selon l'une quelconque des revendications précédentes, dans lequel ledit produit sous forme granulaire a un diamètre moyen allant de 0,5 mm à 10 mm.

7. Procédé selon la revendication 6, dans lequel ledit produit sous forme granulaire a un diamètre moyen allant de 1 mm à 5 mm.

8. Procédé selon l'une quelconque des revendications précédentes, dans lequel ledit produit sous forme granulaire est obtenu par le mélange des deux composants, à savoir, d'au moins un polymère élastomère et d'au moins une cire paraffinique issue du procédé Fischer-Tropsch, suivi par une granulation, ledit mélange étant réalisé par extrusion et ladite granulation étant réalisée en coupant les « spaghetti » obtenus à partir de ladite extrusion.

9. Procédé selon l'une quelconque des revendications précédentes, dans lequel ledit polymère élastomère est choisi parmi des copolymères séquencés d'au moins un diène conjugué avec au moins un composé aromatique vinylique.

10. Procédé selon la revendication 9, dans lequel lesdits copolymères séquencés sont représentés par la formule générale (I) ou par la formule générale (II) :
A-B-A (I)
ou
(A - B)ₙX (II)
dans laquelle chaque bloc A représente un bloc polymère obtenu à partir de monomères aromatiques vinyliques ; chaque bloc B représente un bloc polymère obtenu à partir de monomères de diènes conjugués ; X représente un radical dérivant d'un agent de couplage ; n est un nombre entier allant de 2 à 30.

11. Procédé selon la revendication 9 ou 10, dans lequel ledit polymère élastomère est choisi à partir de copolymères séquencés du type radial contenant des blocs de polystyrène et de polybutadiène, à savoir, des copolymères séquencés de styrène-butadiène-styrène (SBS).

12. Procédé selon l'une quelconque des revendications précédentes, dans lequel ladite cire paraffinique issue du procédé Fischer-Tropsh est choisie parmi les cires paraffiniques ayant un nombre d'atomes de carbone supérieur ou égal à 35.

13. Procédé selon la revendication 12, dans lequel ladite cire paraffinique issue du procédé Fischer-Tropsh est choisie parmi les cires paraffiniques ayant un nombre d'atomes de carbone allant de 40 à 120.

14. Procédé selon l'une quelconque des revendications précédentes, dans lequel ladite cire paraffinique issue du procédé Fischer-Tropsh a un point de fusion supérieur ou égal à 70°C.

15. Procédé selon la revendication 14, dans lequel ladite cire paraffinique issue du procédé Fischer-Tropsch a un point de fusion allant de 80°C à 120°C.

16. Procédé selon l'une quelconque des revendications précédentes, dans lequel ledit produit sous forme granulaire comprend ledit polymère élastomère dans une quantité allant de 30 % en poids à 90 % en poids par rapport au poids total dudit produit sous forme granulaire.

17. Procédé selon la revendication 16, dans lequel ledit produit sous forme granulaire comprend ledit polymère élastomère dans une quantité allant de 40 % en poids à 80 % en poids par rapport au poids total dudit produit sous forme granulaire.

18. Procédé selon l'une quelconque des revendications précédentes, dans lequel ledit produit sous forme granulaire comprend ladite cire paraffinique issue du procédé Fischer-Tropsch dans une quantité allant de 10 % en poids à 90 % en poids par rapport au poids total dudit produit sous forme granulaire.

19. Procédé selon la revendication 18, dans lequel ledit produit sous forme granulaire comprend ladite cire paraffinique issue du procédé Fischer-Tropsch dans une quantité allant de 20 % en poids à 60 % en poids, par rapport au poids total dudit produit sous forme granulaire.

20. Procédé selon l'une des revendications précédentes, dans lequel ledit polymère élastomère est présent dans ledit mélange bitumineux dans une quantité allant de 1 % en poids à 10 % en poids, par rapport au poids total dudit mélange bitumineux.

21. Procédé selon la revendication 20, dans lequel ledit polymère élastomère est présent dans ledit mélange bitumineux dans une quantité allant de 2 % en poids à 6 % en poids, par rapport au poids total dudit mélange bitumineux.

22. Procédé selon l'une quelconque des revendications précédentes, dans lequel ladite cire paraffinique issue du procédé Fischer-Tropsch est présente dans ledit mélange bitumineux dans une quantité allant de 0,5 % en poids à 8 % en poids par rapport au poids total dudit mélange bitumineux.

23. Procédé selon la revendication 22, dans lequel ladite cire paraffinique issue du procédé Fischer-Tropsch est présente dans ledit mélange bitumineux dans une quantité allant de 1 % en poids à 5 % en poids par rapport au poids total dudit mélange bitumineux.

24. Procédé selon l'une quelconque des revendications précédentes, dans lequel ledit bitume est choisi parmi des bitumes dérivant du raffinage du pétrole par le biais d'une distillation sous vide, d'un désasphaltage avec des solvants dans des raffineries à cycle de lubrifiant ; d'un traitement thermique de résidus dérivant desdits procédés ; d'un traitement des résidus dérivant desdits procédés en la présence de courants d'air pour la formation de bitumes oxydés, ou en la présence de vapeur d'eau pour la formation de bitumes semi-solides ; ou de mélanges de ceux-ci.

25. Procédé selon la revendication 24, dans lequel ledit bitume est choisi parmi des bitumes dérivant d'une distillation sous vide ; ou d'un désasphaltage avec des solvants dans des raffineries à cycle de lubrifiant ; ou de mélanges de ceux-ci.
